# EUROPEAN PATENT SPECIFICATION

(11) **EP 2 385 263 B1**
(45) Date of publication and mention of the grant of the patent: **03.08.2016**
(21) Application number: 11165119.6
(22) Date of filing: 06.05.2011
(51) Int. Cl.: F16D 3/38

(54) **A high-strength sleeve yoke having fixing surfaces with reduced machining chipping surface and corresponding production method**
Hochfester Schiebehülse-Gelenkgabel mit Fixierungsoberflächen und verkleinerter Spanfläche und zugehöriges Herstellungsverfahren
Fourchette d'articulation avec manchon coulissant à haute résistance dotée de surfaces de fixation avec une surface d'enlevement redimensionnée et procédé de production correspondant

(30) Priority: 06.05.2010 TR 201003605
(43) Date of publication of application: 09.11.2011
(73) Proprietor: Tirsan Kardan Sanayi Ve Ticaret Anonim Sirketi, 45030 Manisa (TR)
(72) Inventor: Tasan, Korkut, 45030 Manisa (TR); Isik, Efe, 45030 Manisa (TR)
(74) Representative: Dereligil, Ersin

(56) References cited:
- EP-A1- 1 431 604
- GB-A- 2 197 051
- JP-A- 2001 074 060
- US-A- 5 580 184

## Description

### Related Art

The invention relates to fixing surfaces that provide fixing of the sleeve yoke to the broaching bench for the process of cutting spline profiles in the inner section of the sleeve yoke of the cardan shaft in cardan shafts applications.

The said invention relates to the fixing surfaces wherein the sleeve yoke is attached to the broaching bench for the process of cutting spline profiles in the inner section of the sleeve yoke, comprising heights formed on the ear lugs of the said sleeve yoke and the fixing surfaces formed on these heights.

### Prior Art

In the existing applications, the process of fixing on the bench occurs with the fixing surface given to the body part. The fixing surface is contained in circular form on the body. Because the fixing surface in circular form is close to the operation area of the protective cover seal, when the sliding length is kept fixed, the axis distance can not remain under a certain value. Sliding length can be defined as the length that the cardan shaft can extend and shorten by sliding on each other. For this reason, the fixing surface in circular form can not meet the requirement for extremely short cardan shafts need.

Because the fixing surface created on the body part used in the prior art needs to be processed in circular form on all the perimeter, it is necessary to remove large amounts of chips.

In the prior art, larger diameter body, that is unprocessed piece to be processed slower is used because margin of chipping is left for the purpose of creating a fixing surface on the external diameter of the body.

Also, with regard to the prior art; the cardan shaft has lower strength in the zone of fixing area because there does not exist thread form beneath the ear lugs, the fixing surface is created on the external diameter of the body. Because of the diameter of the fixing area is shrinked by machining (with lathe) full circularly in the prior geometry, it has lesser strength than the part produced with the new method.

In the search for patents about the cardan shafts, some applications concerning the prior art were found. Among those applications is the application with no TR2006/06222U made by the firm TiRSAN KARDAN SAN. VE TiC. A. S. on 07.11.2006. That application relates to cardan shaft flange yoke comprising machining surfaces having larger surfaces with circular structure, the ear lug external surfaces also in a large and circular structure, a bearing case, larger spaced ear lug scan surfaces located on the side of the said bearing case and sharp edges, mention being made of a flange yoke application comprising flash line wherein at least one protrusion having less machining surface, less chips, less machining period are achieved.

Application numbered JP200107406 can be evaluated in the same field with the application presented with the invention. The invention presented with this application similarly involves the sleeve yoke (11) production process. The sleeve yoke (11); describes cutting spline profiles (12) into a cylindirical piece with broachinging or a similar method, connecting this piece having spline profiles (12) to another piece having ear lug, with welding or a similar method. The sleeve yoke (11) that is created with this method, although can be easily produced in two pieces, attaching two pieces with methods like welding creates difficulty. Because of the broachinged piece and piece having ear lug (13) are attached with welding methods, protective cover seal (19) can approach to the center of spider bearing in a way of being at least on the other side of the welding area, in this technic diameter of fixing surface (15) can not be as small as the sleeve yoke (11) which is the subject of the invention. Protective cover seal (19) can operate through a fixed diameter, welding area poses an obstacle against this operation.

An application similar to protrusions on the ear lug (13) area of the sleeve yoke (11) presented with the invention, was also described with the application numbered EP1431604A1. These protrusions are created in order to fix spider bearing to its housing, due to circlipss fitted to special channels cutted on it. The system presented with the invention does not have a facilitator effect on broaching operation, and does not have effect on shrinking of diameter of the fixing surface (15). The utilities of the described invention is limited with being bearing to the circlips that fixes the spider bearing

### Description of the Invention

Purpose of the invention is, to cut profiles in spline form for the interior part of the sliding cardan shaft in the cardan shaft applications, to create forehead surface (flat area) needed for reference purpose for connecting the shaft to the machining bench desired to be obtained as very short cardan shafts.

A purpose of the invention is to eliminate a possible negative effects that may occur in the protective cover seal by providing formation of the seal of the forehead surface, desired to be in the external perimeter, in a farther area than the operation area of the protective cover seal of the forehead surface.

Another purpose of the invention is to provide machining in less amount because only the processing of the beneath the ear lugs when the forehead surface is being created beneath the ear lug.

Another purpose of the invention is to provide the use of smaller scale raw, processable piece because the invention eliminates the requirement of leaving the margin of chipping (machining) in the external diameter of the shaft. Thus, the process can be realised with a lighter, (unprocessed) raw part.

A further purpose of the invention on the other hand is to obtain higher strength and stiffness values in the machined areas of the processed cardan shaft.

To meet the above mentioned objectives, the invention relates to the fixing surfaces to cut the spline profiles, in the interior part of the sleeve yoke, wherein the sleeve yoke is fixed to the broaching bench, the heights created on the ear lugs of the said sleeve yoke and the fixing surfaces on these heights are realised.

### Figures that will help to understand the Invention

Figure-1 is a front and perspective view, in the cardan shaft system, of the sleeve yoke according to the invention, having a fixing surface placed under the ear lug.
Figure- 2 is an example view of the sleeve yoke according to the invention, for the use of a short sleeve yoke.
Figure-3 are the views of the sleeve yoke used in the prior art, wherein the fixing surface is not in created, processed form yet.
Figure- 4 are the views of the sleeve yoke used in the prior art, wherein the fixing surface placed under the ear lug is not in created, processed form yet.
Figure- 5 are the views of the sleeve yoke used in the prior art, wherein the fixing surface is in created, processed (machined) form.
Figure- 6 are the views of the sleeve yoke used in the prior art, wherein the fixing surface placed under the ear lug is in created, processed (machined) form.

### Component Numbers

- 10.: Cardan shaft
- 11.: Sleeve yoke
- 12.: Spline profiles
- 13.: Ear lug
- 14.: Height
- 15.: Fixing surface
- 16.: Full circumferential surface
- 17.: Circular fixing surface
- 18.: Yoke shaft
- 19.: Protective cover seal
- 20.: Flange yoke

### Detailed Description of the Invention

In Figure-1, a front and perspective view of the sliding shaft according to the invention, having fixing surface (15) placed under ear lug, in the cardan shaft system is illustrated. The sleeve yoke (11) forms the female sliding piece; the yoke shaft (18) forms the male sliding piece. In Figure-2 on the other hand a two - dimensional view of the complete cardan shaft (10) in semi- partial cross-sectional form is illustrated.

In Figure-3, a side, top, perspective and partial detail views of the sleeve yoke (11) presently used in the prior art are illustrated. As seen in Figure-5, the fixing surface (17) of the sleeve yoke (11) used in the prior art is formed on the full circumferential surface (16) and a circular fixing surface (17) is obtained. Circular form of the fixing surface (17) on the body, hat is on full circumferential surface (16) is seen. (See Figure-3). Because the fixing surface (17) in circular form is close to the operation area of the protective cover seal (19) seen in Figure-2, the axis distance does not remain below a certain value when the sliding length is kept fixed. Therefore, the fixing surface in circular form can not meet the requirement in the very short cardan shaft need. At the same time, both a loss of time occurs in machining and excessive amounts of chip are removed because chip is removed from all the perimeter surface. A further negative aspect of its on the other hand is that it leads to reduction in the strength of the cardan shaft (10). For example, the piece is heavier because it is known that chip will be removed through the sleeve yoke (11) having an unprocessed raw part position in Figure-3 in the prior art. In Figure-5 on the other hand there is a view of the structure, wherein the chips are removed with an angle of 360 degrees from the full circumferential surface (16) of the sleeve yoke (11) belonging to the prior art and circular fixing surface (17) is obtained.

In Figure-6, differently from the prior art, fixing surfaces (15) have been created with an arc angle of 360° as much as the ear lug (13) j - distance with an arc angle of 90° to 150°, without having to remove chips with an arc angle of 360° from full circumferential the surface (16) of the said sleeve yoke (11). In Figure-4, a view of the unprocessed raw piece which is the subject of the invention, that is, the sleeve yoke (11) is illustrated. To create the fixing surfaces (15), the height (14) seen in Figure-4 are created on both ear lugs (13). Purpose of the creation of the heights (14) on the other hand is to fix the sleeve yoke (11) to the broaching bench by taking reference, being able to create the spline profiles (12) seen in Figure-6. Fixing surfaces (15) created on the heights (14) have a shorter distance of chip removal, because fixing surfaces (15) are not full circular, in comparison with the fixing surfaces used in the prior art.. Because the fixing surface (15) is away from the full circumferential surface (16), yet is close to the ear lug (13) area, it provides creation of the protective cover seal (19) in a farther area than the operation area, eliminating also the negative situations that may emerge in the seal (19). In conclusion protective cover seal (19) can be more closer to center of spider positioned between the ear lugs. At the same time, the processing is carried out with a lighter raw (unprocessed) part, also a sleeve yoke (11) having high strength and stiffness is obtained. (For a close- up view of the fixing surface (15), see detail-a).

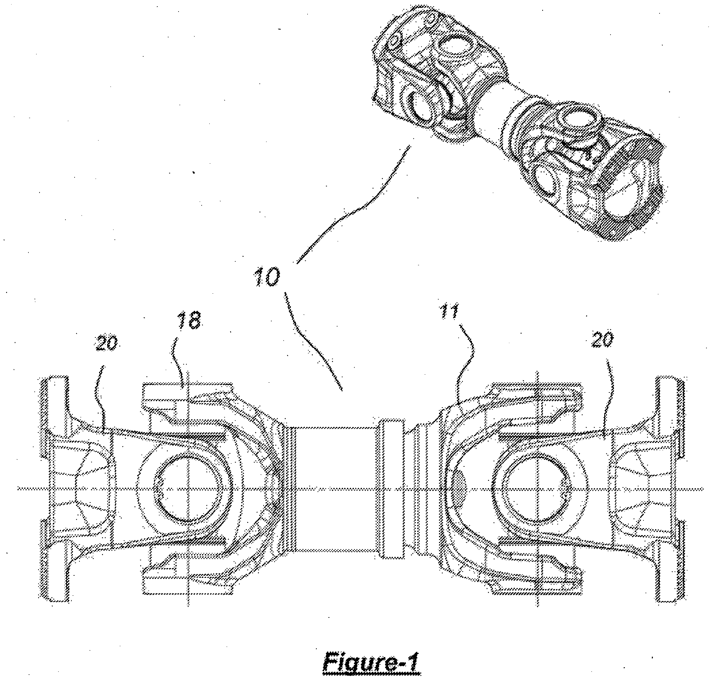

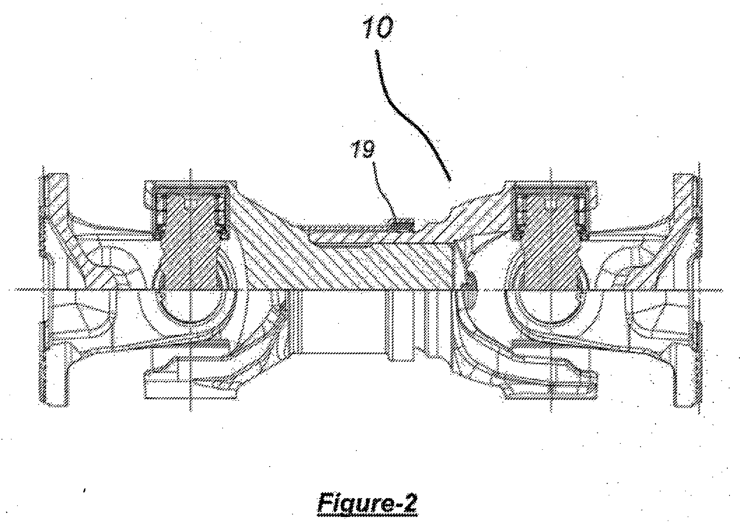

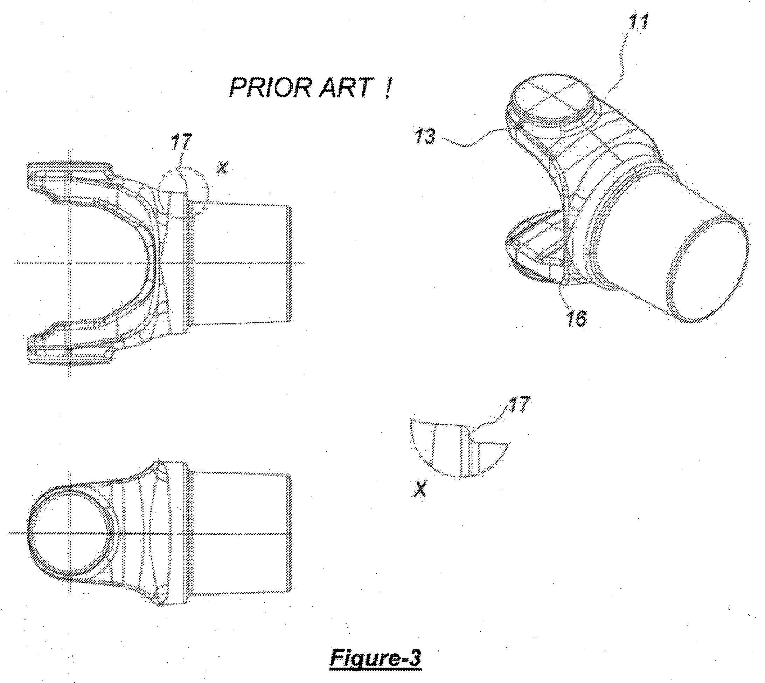

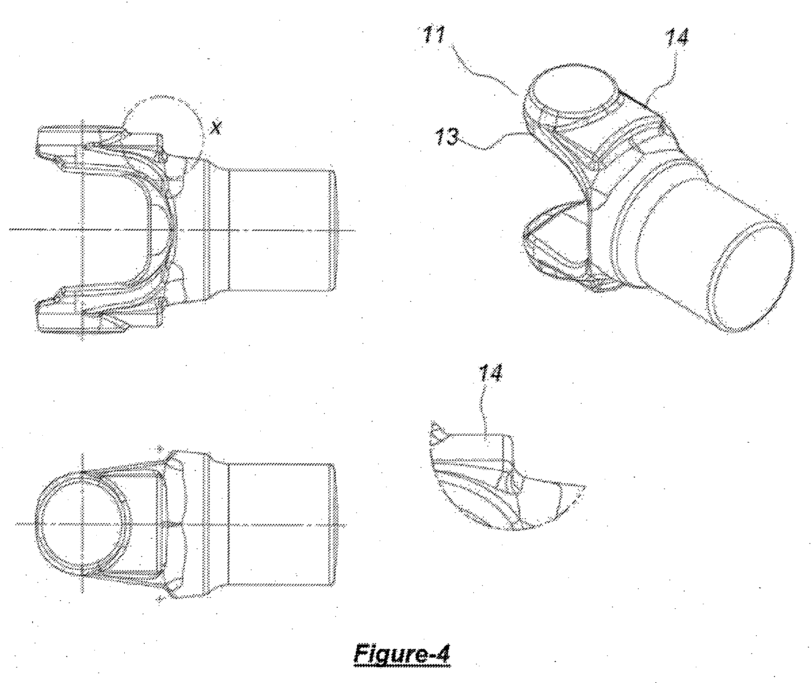

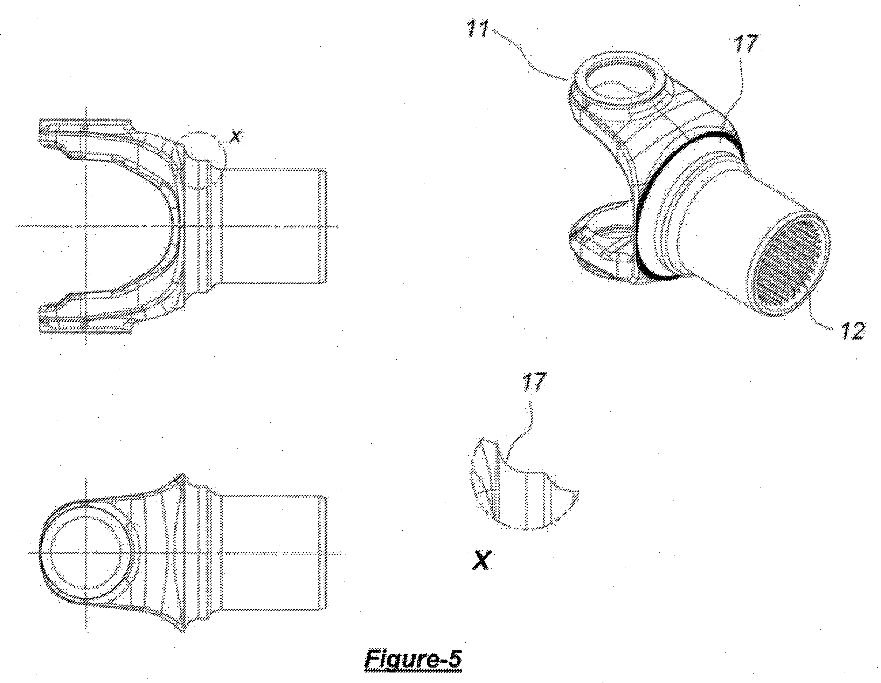

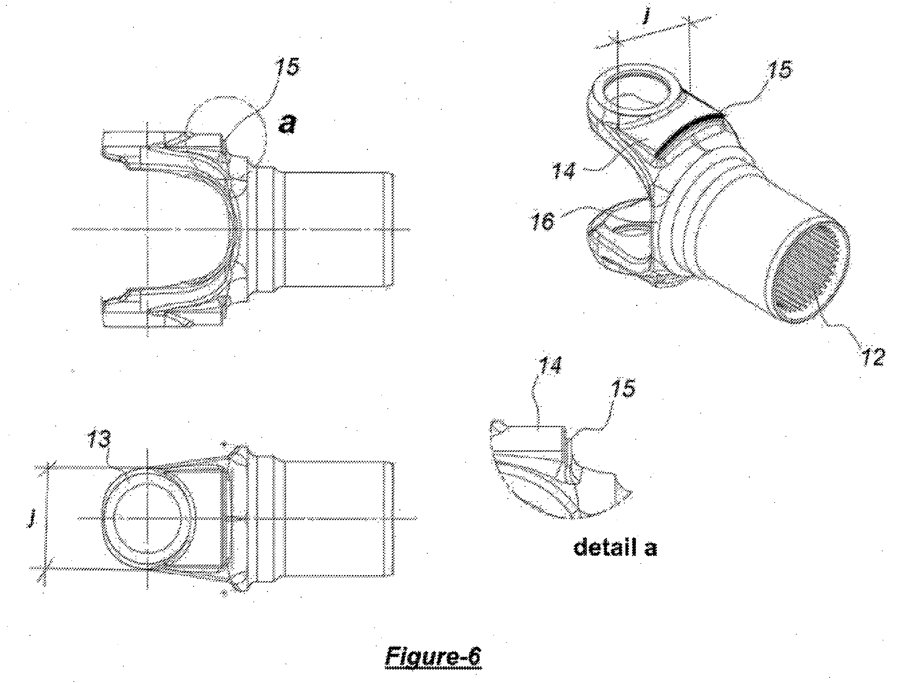

## Claims

1. Sleeve yoke (11) comprising fixing surfaces (15) that provide fixing of the sleeve yoke (11) to the broaching bench for the process of cutting spline profiles (12) in the inner section of the sleeve yoke (11), **characterised in that**, it comprises heights (14) formed on the ear lugs (13) of the said sleeve yoke and the fixing surfaces (15) formed on these heights (14).

2. A sleeve yoke according to Claim 1, **characterised in that**, the said sleeve yoke (11) comprises fixing surfaces (15) away from the full circumferential surface (16); yet, have a processing surface as much as the ear lug (13) distance (j).

3. Production method of a sleeve yoke (11) comprising fixing surfaces (15) for fixing the sleeve yoke (11) to a broaching bench for the process of cutting spline profiles (12) in the interior part of the sleeve yoke (11), **characterised in that**, the fixing surfaces (15) are created with an arc angle of 90° to 150° as much as the distance (j) over the ear lugs (13), without having to remove chips full circularly with an arc angle of 360° from the full circular surface (16) of the said sleeve yoke (11).

4. Method according to Claim 3, **characterised in that**, fixing surfaces (15) shaped up in form of an arc are created in the place wherein the full circumferential surface (16) of the sleeve yoke (11) ends and the ear lungs (13) form begins.

## Patentansprüche

1. Keilnabengelenk (11), umfassend Fixierflächen (15), die eine Fixierung des Keilnabengelenks (11) für den Prozess des Schneidens von Polygonprofilen (12) in dem inneren Bereich des Keilnabengelenks (11) an einer Räumbank bereitstellen, **dadurch gekennzeichnet, dass** es Höhen (14) umfasst, die an den Ansätzen (13) des Keilnabengelenks gebildet sind, wobei die Fixierflächen (15) an diesen Höhen (14) gebildet sind.

2. Keilnabengelenk nach Anspruch 1, **dadurch gekennzeichnet, dass** das Keilnabengelenk (11) Fixierflächen (15) umfasst, die von der gesamten Umfangsfläche (16) entfernt sind, aber eine Bearbeitungsfläche aufweisen, die so groß wie die Weite (j) des Ansatzes (13) ist.

3. Verfahren zur Herstellung eines Keilnabengelenks (11), umfassend Fixierflächen (15), um das Keilnabengelenk (11) für den Prozess des Schneidens von Polygonprofilen (12) in dem inneren Teil des Keilnabengelenks (11) an einer Räumbank zu fixieren, **dadurch gekennzeichnet, dass** die Fixierflächen (15) mit einem Bogenwinkel von 90 ° bis 150 °so groß wie die Weite (j) über den Ansatz (13) erzeugt werden, ohne dass Späne rundumlaufend mit einem Bogenwinkel von 360 ° von der gesamten rundumlaufenden Fläche (16) des Keilnabengelenks (11) entfernt werden müssen.

4. Verfahren nach Anspruch 3, **dadurch gekennzeichnet, dass** die Fixierflächen (15), die die Form eines Bogens aufweisen, an der Stelle gebildet sind, an dem die gesamte Umfangsfläche (16) des Keilnabengelenks (11) endet und die Form der Ansätze (13) beginnt.

## Revendications

1. Étrier à manchon (11) comprenant des surfaces de fixation (15) qui fournissent une fixation de l'étrier à manchon (11) au banc de brochage pour le procédé de découpe de profilés de languettes (12) dans la section intérieure de l'étrier à manchon (11), **caractérisé en ce qu'**il comprend des hauteurs (14) formées sur les pointes (13) dudit étrier à manchon et les surfaces de fixation (15) formées sur ces hauteurs (14).

2. Étrier à manchon selon la revendication 1, **caractérisé en ce que** ledit étrier à manchon (11) comprend des surfaces de fixation (15) éloignées de la surface circonférentielle totale (16) ; ayant cependant une surface de traitement égale à la distance (j) des pointes (13).

3. Procédé de production d'un étrier à manchon (11) comprenant des surfaces de fixation pour fixer l'étrier à manchon (11) à un banc de brochage pour le procédé de découpe de profilés de languettes (12) dans la partie intérieure de l'étrier à manchon (11), **caractérisé en ce que** ; les surfaces de fixation (15) sont créées avec un angle arqué de 90° à 150° égal à la distance (j) sur les pointes (13), sans avoir à retirer de copeaux de sur toute la circonférence avec un angle arqué de 360° de la surface circulaire totale (16) dudit étrier à manchon (11).

4. Procédé selon la revendication 3, **caractérisé en ce que** ; des surfaces de fixation (15) ayant la forme d'un arc sont créées à l'endroit où la surface circonférentielle totale (16) de l'étrier de manchon (11) termine et où la forme de pointe (13) commence.
